# EUROPEAN PATENT APPLICATION

(11) **EP 3 845 895 A1**
(43) Date of publication of application: **07.07.2021**
(21) Application number: 20305001.8
(22) Date of filing: 02.01.2020
(51) Int. Cl.: G01N 27/22

(54) **MULTI-SENSING CAPACITIVE SENSORS**

(71) Applicant: MEAS France, 31027 Toulouse Cedex 3 (FR)
(72) Inventor: GAYRARD, Fabien, 31000 Toulouse (FR)
(74) Representative: Grünecker Patent- und Rechtsanwälte PartG mbB

(57) **Abstract**

The present invention provides a multi-sensing capacitive gas sensor, comprising first sensing element(s) that sense a first physical quantity, where each first sensing element is a gas-sensitive element having a non-linear capacitance as a function the first physical quantity and which is within a predetermined capacitance range for sensed values of the first physical quantity that fall in a respective sub-range of the first measurement range. The gas-sensor further comprises a capacitance measurement system that measures the capacitance of the first sensing element(s) and determines a measurement result of the first physical quantity based on the measurements of capacitance obtained for the first sensing element(s) that fall within the predetermined capacitance range. Linear sensing elements may also be used. Also provided is a method of manufacturing an integrated multi-sensing capacitive gas sensor and a method of measuring one or more physical quantities of a gaseous medium using same.

## Description

### TECHNICAL FIELD OF THE INVENTION

The present invention relates generally to capacitive sensors for detecting and/or measuring physical parameters such as relative humidity, gas pressure, gas composition and air quality of a gaseous medium. More specifically, the present invention relates to a compact multi-sensing capacitive sensor capable of detecting/measuring one or more of such physical parameters and by making use of a linear measuring capacitive system, such as an Application Specific Integrated Circuit (ASIC).

### BACKGROUND OF THE INVENTION

Capacitive sensors are widely used for detecting properties of gaseous mediums in a broad range of applications, such as in engine control, air conditioning, and medical applications, as well as in chemical, automobile and food industry. The basic sensing principle of a capacitive sensor lies in exposing a gas-sensitive dielectric material having a permittivity that changes with the physical quantity to be sensed, such as relative humidity or gas pressure, to the gaseous medium. The sensor capacitance then provides an indication of the current value of the sensed physical quantity.

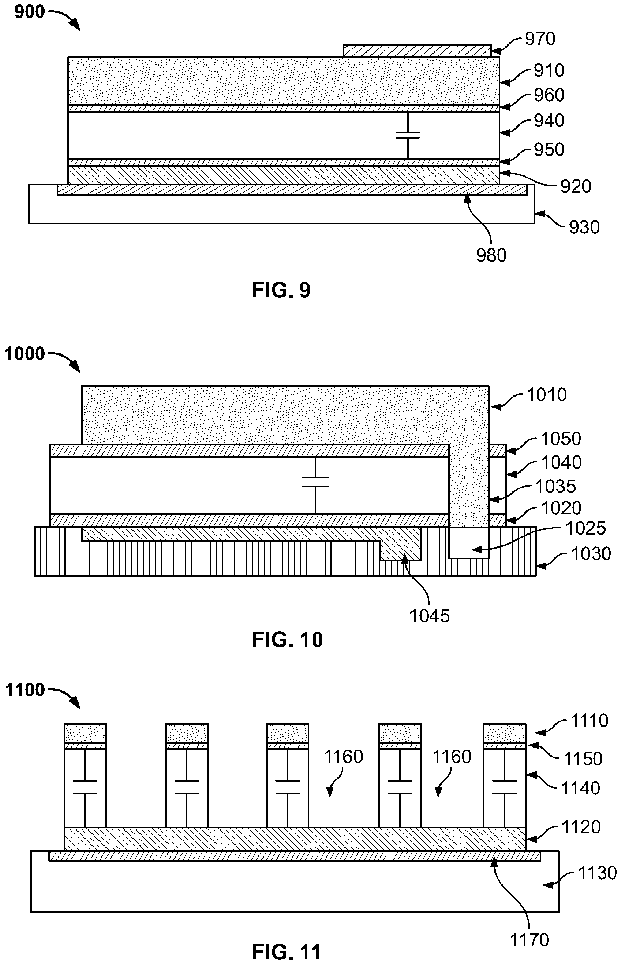

Several configurations of capacitive gas sensors have been proposed. In a common configuration the gas sensing capacitor is built atop a carrier substrate and is electrically connected to measurement circuitry provided in a separate substrate. This configuration has the drawback that the electrical interconnections between substrates may affect the sensor response and is not sufficiently compact for many applications. A capacitive gas sensor in a vertically stacked configuration has been proposed in EP 2 7555 023 B1, in which the gas sensing capacitor is directly constructed on top of active circuitry of an integrated semiconductor circuit, such as a semiconductor ASIC, for reducing size and improving sensor response. In this design, a gas sensor comprised of a parallel plate capacitive gas sensor is constructed directly on top of a passivated surface of a standard semiconductor ASIC for gas sensors. The gas sensor is manufactured by forming a gas sensitive layer onto a bottom electrode layer and a landing pad that are formed on a portion of a passivation layer located over the active circuitry of the ASIC. A top electrode layer is formed onto the gas sensitive layer, such that the top electrode layer completely overlays the surface area of the bottom electrode layer. A portion of the top electrode layer is deposited into a via hole, which is provided through the gas sensitive layer to expose a portion of the landing pad, thereby forming an electrical connection between the top electrode layer and the landing pad. An example of gas sensing capacitor with such a configuration of electrodes is illustrated in Fig. 10.

This configuration allows providing a more compact sensor device. However, a limitation common to many conventional capacitive sensors lies in their accuracy being limited to measurement ranges that are often insufficient for applications that require coverage of a broad variation of a physical parameter, such as relative humidity and/or gas pressure. Separate capacitive sensors with different measurement ranges may be employed so as to cover the entire range of interest, such as separate capacitive sensors for measuring relative humidity in high and low humidity levels, or for measuring pressure in low and high pressure conditions. However, this is a costly solution, due to the elevated costs associated with the dedicated CMOS or semiconductor ASIC of each single gas sensor, and implies a significant increase in the volume of the overall sensor device.

The type of dielectric material composing the capacitive sensor also imposes technical restrictions in terms of accuracy and sensitivity range. Organic materials, such as polyimides, are commonly used as gas-sensitive dielectric due to their linear response, low hysteresis, and facility in adsorbing the retained gas (or water vapour) in response to a decrease in relative humidity. However, polyimides present low sensitivity to humidity values below 5% RH and very long stabilization times. Gas sensors with a gas-sensitive dielectric made of inorganic materials, such as silicon nitride or silicon carbide, have been proposed since these materials exhibit faster response times than polyimides. However, conventional gas sensors employing inorganic materials as the gas-sensitive dielectric may exhibit a non-linear capacitive response (e.g. exponential, logarithmic or polynomial like), and therefore, cannot be directly measured with standard linear capacitive measurement systems, such as ASICs for gas sensors, without additional modifications of the ASIC and/or require a specially developed log-measuring system.

Therefore, there is still a need for compact and cost effective capacitive sensor designs capable of providing accurate and fast response to one or more physical quantities over a wider measurement range than capacitive sensors of the prior art.

### SUMMARY OF THE INVENTION

The present invention has been made in view of the shortcomings and disadvantages of the prior art, and an object thereof is to provide a multi-sensing capacitive sensor that is capable of measuring more than one physical quantity, such as relative humidity, gas pressure, air quality and gas composition, and/or in more than one range of variation of the measured physical parameters, with a compact size and in a cost-effective manner. A further object of the present invention is to provide a solution that allows managing non-linear capacitive sensing elements and get a maximum of accuracy performance from a multi-sensing device using different sensing elements. Additional objects of the present invention is to provide a method of manufacturing an integrated multi-sensing capacitive sensor and a method of measuring a physical quantity of a gaseous medium using a plurality of sensing elements.

This object is solved by the subject matter of the independent claims. Embodiments of the present invention are subject matter of the dependent claims.

A concept underlying the present invention lies in providing a multi-sensing capacitive sensor that makes use of a single capacitive measurement system (such as an ASIC) to measure a plurality of sensing elements, thereby sensing one or more physical parameters, such as relative humidity and gas pressure, and/or over a broader measurement range than conventionally achieved with individual capacitive sensors. Thus, the solution of the claimed invention allows construction of smaller and cost-effective multi-sensing capacitive sensors in comparison with the related prior art.

According to the present invention, it is provided a multi-sensing capacitive gas sensor, comprising: one or more first sensing elements adapted to sense a first physical quantity over a first measurement range; and a capacitance measurement system adapted to perform measurements of capacitance of said one or more first sensing elements; wherein each first sensing element is a gas-sensitive element having a capacitance that varies non-linearly with a variation of said first physical quantity and which is within a predetermined capacitance range for sensed values of the first physical quantity that fall in a respective sub-range of the first measurement range, and the capacitance measurement system is adapted to obtain a measurement result for the first physical quantity based on a linear approximation of the measurements of capacitance of the one or more first sensing elements that fall within the predetermined capacitance range.

According to a further development, one or more first sensing elements comprises a gas-sensitive dielectric made of an inorganic material, the inorganic material selected from a group that includes silicon carbide, nitride, silicium oxide, silicium nitride and inorganic oxides; and/or one or more first sensing elements comprises a gas-sensitive dielectric made of an organic dielectric material selected from a group that includes polyimide; and/or the first physical quantity sensed by the one or more first sensing elements is one from a group including: relative humidity, pressure, air quality, gas composition and temperature.

According to a further development, the multi-sensing capacitive gas sensor includes at least two first sensing elements adapted to sense the first physical quantity, each first sensing element being associated with a respective sub-range of the first measurement range, the sub-ranges associated with the first sensing elements do not overlap each other or overlap only partially, and wherein the capacitance measurement system is adapted to measure the capacitance of each of said at least two first sensing elements, to select a first sensing element for which the capacitance measurements fall within the predetermined capacitance range and to obtain the measurement result for the first physical quantity by applying said linear approximation to the capacitance measurements of the selected first sensing element.

According to a further development, the multi-sensing capacitive gas sensor further comprises: one or more second sensing elements adapted to sense a second physical quantity over a second measurement range, wherein each second sensing element is a gas-sensitive element having a capacitance that varies within said predetermined capacitance range for sensed values of the second physical quantity that fall in a respective sub-range of the second measurement range; and wherein the capacitance measurement system is adapted to perform measurements of capacitance of the one or more second sensing elements and to obtain a measurement result for the second physical quantity based on a linear approximation of the measurements of capacitance of the one or more second sensing elements that fall within the predetermined capacitance range; and/or wherein the capacitance of said one or more second sensing elements varies linearly or non-linearly with the sensed second physical quantity.

According to a further development, the multi-sensing capacitive gas sensor includes at least two second sensing elements adapted to sense the second physical quantity, each second sensing element being associated with a respective sub-range of the second measurement range, wherein the sub-ranges associated with the second sensing elements do not overlap each other or overlap only partially, and wherein the capacitance measurement system is adapted to measure the capacitance of each of said at least two second sensing elements, to select a second sensing element for which the capacitance measurements fall within the predetermined capacitance range and to obtain the measurement result for the second physical quantity by applying said linear approximation to the capacitance measurements of the selected second sensing element.

According to a further development, one or more second sensing elements comprises a gas-sensitive dielectric made of an inorganic material, the inorganic material selected from a group that includes silicon carbide, nitride, silicium oxide, silicium nitride and inorganic oxides; and/or one or more second sensing elements comprises a gas-sensitive dielectric made of an organic dielectric material selected from a group that includes polyimide; and/or the second physical quantity is different from the first physical quantity and selected from a group that includes: relative humidity, pressure, air quality, gas composition and temperature. The one or more first sensing elements.

According to a further development, the capacitance measurement system is an Application-Specific Integrated Circuit "ASIC"; and/or the non-linear capacitance of the sensing element follows one of an exponential function, a logarithmic function, an inverse function and a polynomial-like function of the respective sensed physical quantity.

According to a further development, each sensing element is directly mounted onto the capacitance measurement system which is provided as an integrated circuit; or each sensing element is mounted onto a carrier substrate that is separate from the capacitance measurement system.

According to a further development, one or more of the sensing elements comprise: a first electrode; a second electrode; a gas-sensitive dielectric material arranged between the first and the second electrodes to form a gas-sensitive capacitor, the gas-sensitive dielectric material having a permittivity that depends on an amount of gas compound absorbed from an environmental medium; and/or wherein the gas-sensitive dielectric material is one of an organic dielectric material and an inorganic material.

According to a further development, one or more of the sensing elements is directly mounted onto a semiconductor circuit substrate, the second electrode being arranged directly on the semiconductor circuit substrate, the first electrode being connected to a patch in the semiconductor circuit substrate through a via hole that passes across the gas-sensitive dielectric material.

According to a further development, one or more of the sensing elements has a perforated structure design or an interdigitated electrode structure design.

The present invention also provides a method of manufacturing an integrated multi-sensing capacitive gas sensor with improved sensor accuracy, the method comprising: providing a capacitance measurement system; arranging one or more first sensing elements onto a side of the capacitance measurement system, wherein the one or more first sensing elements is adapted to sense a first physical quantity over a first measurement range, each first sensing element is a gas-sensitive element adapted to provide a capacitance that varies non-linearly with a variation of said first physical quantity and which is within a predetermined capacitance range for sensed values of the first physical quantity that fall in a respective sub-range of the first measurement range, and the capacitance measurement system is designed with active circuitry adapted to measure capacitance of said one or more first sensing elements and to obtain a measurement result for the first physical quantity based on a linear approximation of the measurements of capacitance of the one or more first sensing elements that fall within the predetermined capacitance range.

Thus, the claimed inventions provides a solution that allows managing non-linear sensing elements and getting maximum of accuracy performance from them using different sensing elements.

According to a further development, the method further comprises: arranging one or more second sensing elements onto a side of the capacitance measurement system, wherein the one or more second sensing elements are adapted to sense a second physical quantity over a second measurement range, each second sensing element is a gas-sensitive element having a capacitance that varies within a predetermined capacitance range for sensed values of the second physical quantity that fall in a respective sub-range of the second measurement range, and the capacitance measurement system is further adapted to measure capacitance of said one or more second sensing elements and to obtain a measurement result for the second physical quantity based on a linear approximation of the measurements of capacitance of the one or more second sensing elements that fall within the predetermined capacitance range.

The present invention further provides a method of measuring one or more physical quantities of a gaseous medium with improved measurement accuracy, the method comprising: providing one or more first sensing elements adapted to sense a first physical quantity over a first measurement range, wherein each first sensing element is a gas-sensitive element having a capacitance that varies non-linearly with a variation of said first physical quantity and which is within a predetermined capacitance range for sensed values of the first physical quantity that fall in a respective sub-range of the first measurement range; acquiring a capacitance measurement of each of the one or more first sensing elements; selecting one or more of the first sensing elements for which the capacitance measurements fall within the predetermined capacitance range; obtaining a measurement result for said first physical quantity by applying a linear approximation to the capacitance measurements of the selected one or more first sensing elements; and outputting the measurement result for the first physical quantity determined using said linear approximation.

Thus, the claimed invention allows reaching a better overall measurement accuracy in comparison with conventional sensors.

According to a further development, the method further comprises: providing one or more second sensing elements adapted to sense a second physical quantity over a second measurement range, wherein each second sensing element is a gas-sensitive element having a capacitance that varies within a predetermined capacitance range for sensed values of the second physical quantity that fall in a respective sub-range of the second measurement range; acquiring a capacitance measurement of each of the one or more second sensing elements; selecting one or more of the second sensing elements for which the capacitance measurements fall within the predetermined capacitance range; obtaining a measurement result for said second physical quantity by applying a linear approximation to the capacitance measurements of the selected one or more second sensing elements; and outputting the measurement result for the second physical quantity determined using said linear approximation.

The accompanying drawings are incorporated into and form a part of the specification for the purpose of explaining the principles of the invention. The drawings are not to be construed as limiting the invention to only the illustrated and described examples of how the invention can be made and used.

### BRIEF DESCRIPTION OF THE FIGURES

Further features and advantages will become apparent from the following and more detailed description of the invention as illustrated in the accompanying drawings, in which:
**Fig. 1** is a schematic perspective view of a multi-sensing capacitive sensor according to an embodiment of the present invention;
**Fig. 2** represents graphically the variation of capacitance of each of the sensing elements of the multi-sensing capacitive sensor illustrated in Fig. 1 as a function of relative humidity;
**Fig. 3** is a schematic perspective view of a multi-sensing capacitive sensor according to a further embodiment of the present invention;
**Fig. 4** is a flowchart exemplifying a method of measuring a physical quantity according to an embodiment of the present invention;
**Fig. 5** is a schematic perspective view of a multi-sensing capacitive sensor with sensing elements that are connected to bonding pads of an underlying ASIC via wire bonding;
**Fig. 6** is a schematic perspective view of a multi-sensing capacitive sensor with sensing elements that are directly connected to bonding pads of an underlying ASIC;
**Fig. 7** is a schematic perspective view of a multi-sensing capacitive sensor with sensing elements that are connected to bonding pads of an underlying ASIC via conducting strips;
**Fig. 8** is illustrates a multi-sensing capacitive sensor with sensing elements that are mounted onto a semiconductor substrate and electrically connected to an external capacitance measurement system;
**Fig. 9** is a schematic cross-sectional view of a capacitive sensing element having a vertically stacked electrode-dielectric-electrode configuration that is applicable to any of the configurations of the multi-sensing capacitive sensor described with reference to Figs. 1 - 8;
**Fig. 10** is a schematic cross-sectional view of a further configuration of a capacitive sensing element with a vertical stacked electrode-dielectric-electrode configuration that is mounted directly onto an ASIC substrate;
**Fig. 11** is a schematic cross-sectional view of a capacitive sensing element with a perforated structure design;
**Fig. 12** is a schematic top view of a capacitive sensing element with an interdigitated electrode design; and
**Fig. 13** is a schematic cross-sectional view of the capacitive sensing element shown in Fig. 12.

### DETAILED DESCRIPTION OF THE INVENTION

The present invention will now be more fully described hereinafter with reference to the accompanying drawings, in which exemplary embodiments of the invention are shown. The present invention may, however, be embodied in many different forms and should not be construed as limited to the embodiments set forth herein. Rather, these embodiments are provided so that the disclosure will be thorough and complete, and will fully convey the scope of the invention to those skilled in the art. Like numbers refer to like elements throughout.

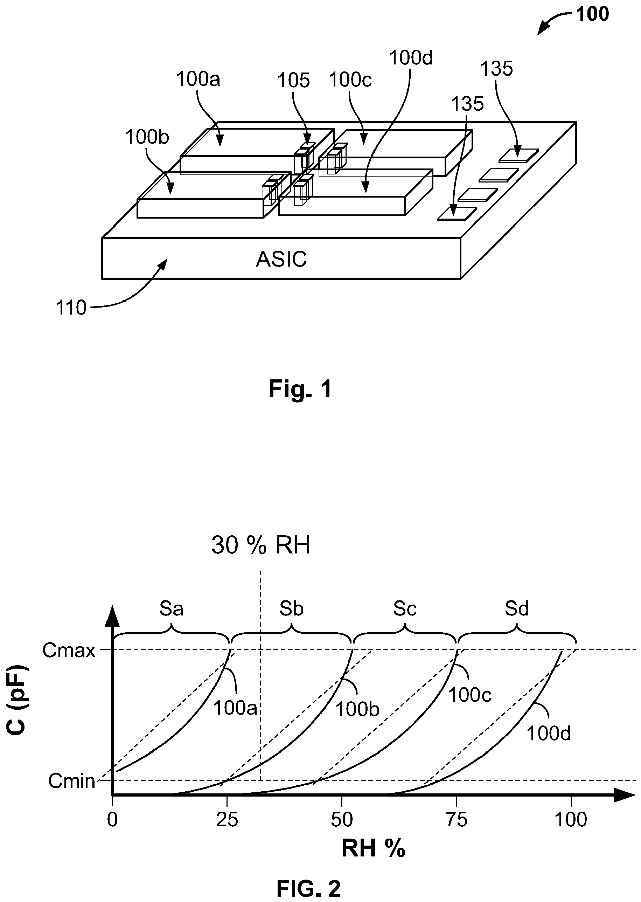

Fig. 1 schematically illustrates a multi-sensing capacitive sensor 100 for measuring at least one physical quantity of the surrounding medium, such as relative humidity, pressure, air quality, gas composition and temperature. For this purpose, the multi-sensing capacitive sensor 100 includes one or a plurality of sensing elements 100a - 100d for sensing a physical quantity, for e.g. relative humidity, and a capacitance measurement system 110 that includes active circuitry (not shown) for operating and/or measuring each of the individual sensing elements 100a - 100d, such as an ASIC for gas sensors.

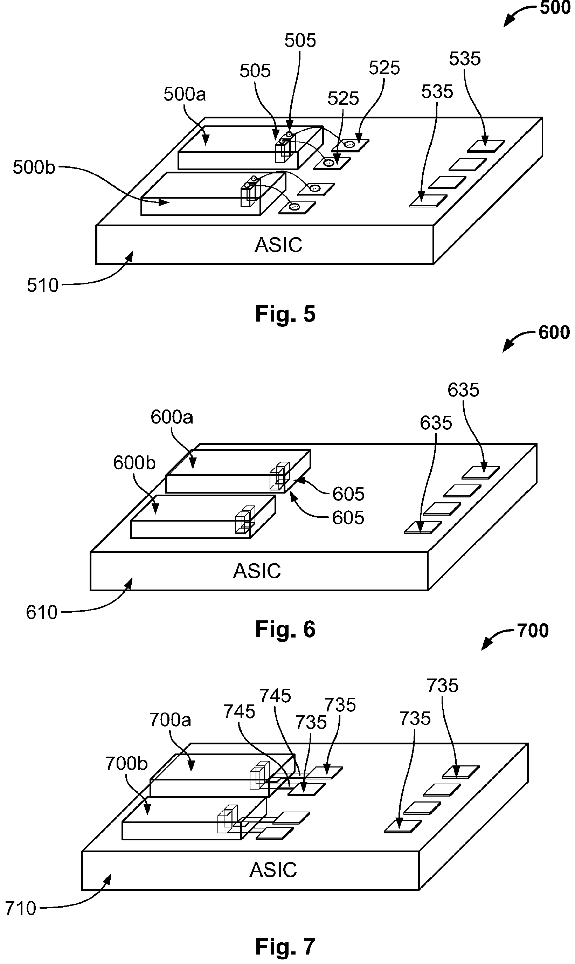

The sensing elements 100a - 100d may be directly mounted onto and operated by the same capacitance measurement system 110, as shown in Fig. 1, thereby reducing the overall volume and manufacturing costs of the multi-sensing capacitive sensor 100. In the case of using an ASIC as the capacitance measurement system 110, the sensing elements 100a - 100d are preferably deposited onto a passivation layer atop the ASIC 110 for reducing parasitic effects. The electrical connections of each sensing element 100a - 100d to the active circuitry provided in the ASIC 110 may be accomplished using several connection methods, such as those exemplified in Figs. 5 to 7.

Each of the sensing elements 100a - 100d is a capacitive element sensitive to a specific gas physical property to be sensed or measured. For instance, gas-sensitive dielectric materials composed of organic or inorganic dielectric materials may be used for any of the sensing elements 100a - 100d. As mentioned above, inorganic sensors are known to provide fast response times but may generally have a capacitance response C(x) characterized by a non-linear function of the gas physical parameter x to be sensed (for e.g. exp (x), log (x), 1/x, polynomial, etc...), which makes difficult to measure their capacitance using linear capacitance measurement systems, such as standard ASICs for gas sensors. In addition, since standard ASICs for gas sensors in general can only provide capacitance measurements in a limited range of capacitance, it is difficult to obtain accurate measurements of the gas physical parameter over the entire sensitivity range of a non-linear capacitive element, except in a limited interval where the measured capacitance falls in the measurement capacitance range interval [Cmin, Cmax] of the capacitance measurement system. The multi-sensing capacitive sensor 100 allows obtaining accurate measurements of a gas physical parameter using a linear capacitance measurement system 110 by employing one or more sensing elements with capacitance values that fall in the system predetermined capacitance range [Cmin, Cmax], and by obtaining a measurement result of the physical quantity to be sensed using a linear approximation to the measured values of capacitance that fall in the interval. Thus, it is not required to develop a non-linear specific (e.g. exponential, logarithmic, polynomial, or the like) measuring system for obtaining accurate measurements using capacitive elements that follow a non-linear response. Thus, this design is cost-effective and allows using the same ASIC in different applications.

In addition, in order to extend the overall measurement range of the gas physical parameter beyond the limited sensitivity range associated with an individual sensing element, the multi-sensing capacitive sensor 100 may use an assembly of n sensing elements to sense a same physical quantity, where each sensing element i of the assembly (where i is an integer between 1 and n) is designed to sense the same gas physical parameter but with a different sensitive range or sub-range Si (i = 1, ..., n) of the overall measurement range of interest. The characteristics of each sensing element i are selected such as to provide an individual capacitance C(i) that varies within the predetermined capacitance range [Cmin, Cmax] of the capacitance measurement system 110 in the respective sub-range Si.

For instance, in the example of Fig. 1, the sensing elements 100a - 100d form a sensing assembly for measuring the same physical parameter (e.g. relative humidity), each sensing capacitive element being characterized by a non-linear capacitive response over a respective, different sensitivity range Si. In this case, the capacitance measurement system 110 is configured to obtain a measurement result of the sensed physical quantity by measuring the capacitance of each of the sensing elements 100a - 100d (e.g. simultaneously or in a time sequence) and determining/selecting one (or more) of the sensing elements 100a - 100d that have a capacitance within the predetermined capacitance range at the time relative humidity is being measured. The capacitance measurement system 110 may then obtain the measurement result of the current relative humidity by applying a linear approximation to the capacitance measurements acquired for the selected sensing element(s) that are within the predetermined capacitance range.

The number of sensing elements 100a - 100d and technical parameters of each sensing element, such as thickness and material of the respective gas-sensitive dielectric layer(s), depend on the gas physical parameter(s) to be sensed by the multi-sensing capacitive sensor 100, the overall measurement range, and the capacitance measurement range of the capacitance measurement system 110. Fig. 2 illustrates graphically an example of the capacitance response of each of the sensing elements 100a - 100d of the multi-sensing capacitive sensor 100 as a function of the relative humidity. As shown in Fig. 2, each of the sensing elements 100a - 100d is designed to provide a measurable capacitance that is within the predetermined capacitance range of the capacitance measurement system 110 (for e.g. Cmax = 3pF and Cmin = 2pF for standard gas sensor ASICs) for values of relative humidity within respective sub-ranges Sa - Sd.

The sub-ranges Sa - Sd may be non-overlapping while covering altogether the entire measurement range, for e.g. from 0 to 100% RH, as in the example of Fig. 2. For instance, referring to Fig. 2, the sensing element 100a is characterized by a capacitance response that falls within [Cmin, Cmax] in the sub-range Sa from 0% RH to 25% RH, and therefore, is used to provide measurements of relative humidity within this sub-range Sa. The sensing element 100b is used to provide relative humidity measurements in an adjacent sub-range Sb from 25%RH to 50%RH, within which its capacitance response falls in the range [Cmin, Cmax] (or with overlap from 10%RH to 65%RH). The sensing element 100c provides relative humidity measurements in the sub-range Sc from 50%RH to 75%RH. Alternatively, one or more of the measurement sub-ranges Sa - Sd may overlap only partially with adjacent sub-ranges. For instance, the sensing elements 100b and 100c may be used to provide measurements with overlapping sub-ranges of about 25%RH to 55%RH and about 45%RH to 75%RH, respectively.. Finally, the sensing element 100d is characterized by a capacitance response between Cmin and Cmax in the sub-range Sd from 75% RH to 100% RH, and therefore, is used to provide relative humidity measurements in the sub-range Sd (or with overlapping sub-range from 70%RH to 100%RH). Thus, in the example illustrated in Fig. 2, at an actual relative humidity of 30% of the surrounding medium, the capacitance measurement system 110 acquires a capacitance value of 3pF (i.e. Cmax) for the sensing element 100a, a capacitance value within 2pF (Cmin) and 3pF (Cmax) associated with the sensing element 100b, and zero capacitance for the sensing elements 100c and 100d. As a result, the capacitance measurement system 110 will elect the sensing element 100b which has a capacitance value within the capacitance range and determines the relative humidity at a present time by applying a linear approximation to the capacitive response of the elected sensing element 100b.

The extent of overlapping between adjacent sub-range intervals may be set based on the capacitance measurement range of the capacitance measurement system 110, the non-linear characteristic of the sensing elements 100a - 100d, and/or the desired accuracy for the measurement results obtained by applying a linear approximation. In any case, the sub-ranges Sa - Sd should be selected to ensure that the non-linear capacitance response of each of the sensing elements 100a - 100d in the respective sub-ranges can be reasonably approximated by a linear function such as to obtain a measurement result of the sensed gas physical parameter with a desired accuracy. For example, as shown in Fig. 2, although the sensing element 100b is sensitive to relative humidity variations between 0 and 50% RH, the capacitive response at humidity values below 10% RH is almost flat, and therefore, a linear approximation applied in this region does not provide an accurate measurement of relative humidity. On the other hand, the sensing element 100c is sensitive to humidity values ranging from about 25% to 75% RH, thereby overlapping with the sensitive ranges of the sensing elements 100b and 100d.

However, due to the non-linear response of the sensing elements 100b, 100c, and 100d, the linear approximation will produce more accurate results when applied to the capacitive response that falls within the predetermined capacitance range, so that the capacitance measurement system 110 will select the sensing element 100c to obtain relative humidity measurements in the sub-range Sc.

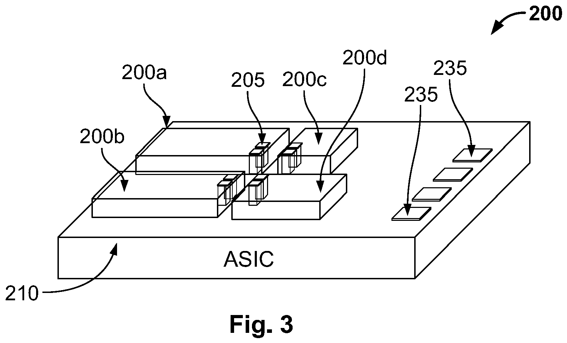

The multi-sensing capacitive sensor 100 is illustrated in Fig. 1 with four sensing elements 100a, 100b, 100c, and 100d with different sensitivity ranges for measuring relative humidity. However, the number of sensing elements forming a same sensing assembly is not limited to four and may include only two or more sensing elements. Moreover, instead of relative humidity, the sensing elements 100a - 100d may be designed to provide measurements of another gas physical parameter, such as gas pressure, air quality, gas composition and temperature. Further, a plurality of sensing assemblies for measuring a plurality of gas physical parameters, such as relative humidity and gas pressure, may be provided, as it will be now described with reference to Fig. 3. In a further configuration, the multi-sensing capacitive sensor may comprise a sensing assembly of two or more sensing elements to sense a same physical parameter over a given measurement interval, each sensing element being a capacitive element that exhibits a linear capacitance variation in response to a variation of the physical parameter in a respective sub-range of the measurement interval.

Fig. 3 illustrates schematically a multi-sensing capacitive sensor 200 according to a further embodiment of the present invention. Similarly to the multi-sensing capacitive sensor 100 described above with reference to Fig. 1, the multi-sensing capacitive sensor 200 includes an assembly of sensing elements 200a - 200b with respective different sensitivity ranges to sense a same physical quantity, for e.g. relative humidity, such as the sensing elements 100a - 100d in Fig. 1. In addition, the multi-sensing capacitive sensor 200 includes one or more sensing elements 220 and 230 for sensing a second or additional gas physical quantities, different from the first physical quantity sensed by the sensing elements 200a - 200b. For example, the sensing elements 220 and 230 may be sensitive to pressure and air quality, respectively, in a case where the sensing elements 200a - 200b detect relative humidity. Similarly to the embodiment of Fig. 1, the multi-sensing capacitive sensor 200 also includes a linear capacitive measurement system 210, such as an ASIC, specifically designed with the required active circuitry for operating and measuring the sensing elements 200a - 200b, 230, and 240. The sensing elements 200a - 200b, 230, and 240 may be directly mounted onto the capacitive measurement system 210, thereby reducing volume and manufacturing costs. The sensing elements 230 and 240 may be also provided as capacitive sensing elements. For instance, each of the sensing elements 230 and 240 may have a non-linear capacitive response in a respective sub-range of measurement, such as described above with reference to the capacitive sensing elements 100a - 100d. The capacitance measurement system 210 may apply the same measurement process for obtaining the relative humidity from elements 200a - 200b, such as described above with reference to Fig. 1. In addition, in order to obtain a measurement result of the physical quantities sensed by the sensing elements 230 and 240, the capacitance measurement system 210 is also configured to acquire measurements from each of the sensing elements 230 and 240, determine whether the sensing element capacitance falls within the capacitance measurement range [Cmin, Cmax] of the capacitance measurement system 210, and then apply a linear approximation to the capacitance values acquired from the selected sensing element to obtain the measurement result for the respective gas physical parameters.

This configuration of the multi-sensing capacitive sensor 200 combines the benefits of the multi-range sensing provided by the assembly of sensing elements 200a - 200b described above, with the advantage of incorporating multiple sensing functionalities in a same sensor device and using a common capacitance measurement system 210, thereby reducing costs and providing a multi-sensing device with a compact design.

The multi-sensing capacitive sensor 200 may include additional sensing elements or sensing assemblies for measuring the additional physical quantities. For instance, instead of a single sensing element 230 (or 240) for sensing pressure (or air quality) as in the example shown in Fig. 2, a sensing assembly having two or more sensing elements to sense pressure (or air quality) over different measurement sub-ranges and which are individually measured by the capacitance measurement system 210 may be used, such as to cover a wider measurement range of pressure than with a single sensing element and/or to improve the measurement accuracy reached with the linear approximation, similarly to the assembly of sensing elements 200a - 200b for measurement of relative humidity.

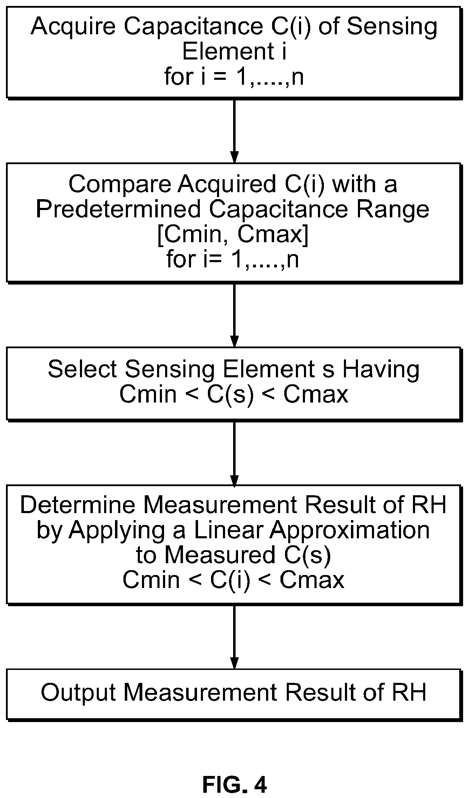

For each sensing assembly that measures a same gas physical parameter, the capacitance measurement system 110 (or 210) is adapted to apply a measurement process, which can be implemented by a suitable algorithm running in a processor integrated in the capacitance measurement system 110 (or 210). An example of a measurement process that can be applied by the capacitance measurement system 110 (or 210) is illustrated in the flowchart of Fig. 4. As a first step, the capacitance measurement system 110 (or 210) acquires a capacitance value C(i) for each sensing element i from the plurality of n sensing elements that form a sensing assembly for measuring a same physical quantity, such as relative humidity, for e.g. the sensing elements 100a - 100d (n = 4) in the configuration of Fig. 1, or the sensing element 200a - 200b (n = 2) in the example of Fig. 2 that sense (i.e. n=4 in the example of Fig. 1). The capacitance values C(i) (i = 1, ..., n) may be obtained simultaneously or by sequentially switching from one sensing element to the next. The capacitance measurement system 110 (or 210), then compares the acquired capacitance values C(i) are with the capacitance range [Cmin, Cmax] and select the sensing element s having a capacitance C(s) that falls in the capacitance range (i.e. Cmin < C(s) < Cmax). The measurement result for the present relative humidity is then determined by the capacitance measurement system 110 (or 210) by applying a linear approximation to the measured C(s). In case of using partially overlapping sub-ranges, the step of comparison described above may lead to two sensing elements (s and s+1) having respective capacitances C(s) and C(s+a) that fall in the predetermined capacitance range. In this case, the capacitance measurement system 110 (or 210) may apply a linear approximation to the capacitance responses of the selected sensing elements to determine a value of relative humidity, corresponding to each measurement C(s) and C(s+1) and to obtain a measurement result for the relative humidity based on both determined relative humidity, for e.g. by using an averaging function.

The electrical connections of each sensing element of the multi-sensing capacitance sensors 100 and 200 to the active circuitry to operate and measure the respective sensing elements may be accomplished using several configurations, such as those exemplified in Figs. 5 to 7 for two sensing elements.

For simplicity reasons, Fig. 5 illustrates a multi-sensing capacitance sensor 500 having only two sensing elements 500a, 500b of a type similar to the sensing elements described above. In this configuration, each sensing element 500a, 500b has respective bonding pads 505 deposited on a top side for electrically connection (via wire bonding) to respective input bonding pads 525 provided on the mounting surface of the ASIC 510. Each bonding pad 505 is electrically connected to the top or bottom electrode of the respective sensing element by means known in the art, such as interconnects and/or via holes (not shown). The ASIC input pads 525 are electrically connected with the active circuitry (not shown) provided inside the ASIC 510 for operating and measuring the respective sensing elements 500a, 500b. ASIC output pads 535 may be provided on the mounting surface of the ASIC 510 for connecting to external circuitry, such as a power source and/or processing device (not shown).

An alternate electrical connection is shown in Fig. 6. In this configuration, a multi-sensing capacitance sensor 600 has sensing elements 600a, 600b with properties similar to the sensing elements 500a - 500b described above, with the difference that the contact pads 605 are provided on the side that faces the surface of the ASIC 610 onto which the sensing elements 600a, 600b are mounted. In this case, a direct electrical contact with corresponding input pads (not shown) provided on the mounting surface of the ASIC 610 can be established.

Another electrical connection configuration is shown in Fig. 7 for a multi-sensing capacitance sensor 700 having sensing elements 700a, 700b similar to the sensing elements 600a, 600b described above but having contact pads 705 provided on the bottom side of the sensing elements 700a, 700b that are electrically connected to the ASIC input pads 725 via conducting strips 714. This configuration allows to easily adapt an ASIC having a given configuration of input pads to different mounting positions/size of the sensing elements 700a, 700b.

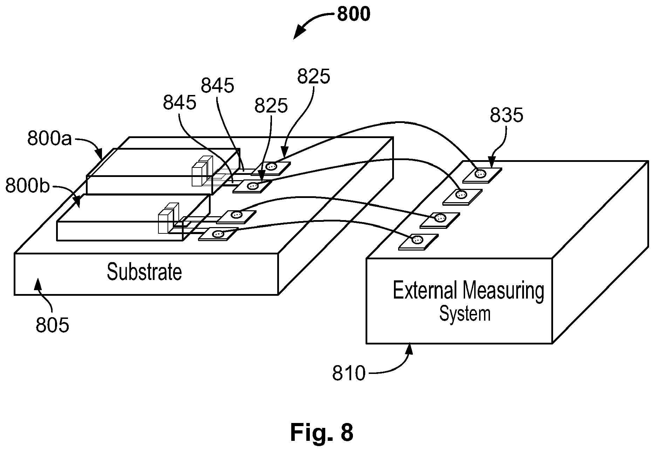

The multi-range and/or multi-sensing concept of using multiple sensing elements for sensing a same and/or multiple physical quantities with a same capacitance measurement system may be applied to a configuration where the capacitive measurement system is provided separate from the carrier substrate onto which the sensing elements are mounted, such as illustrated in Fig. 8.

Fig. 8 illustrates a multi-sensing capacitive sensor 800 having two sensing elements 800a, 800b directly mounted onto a carrier substrate 805, where the active circuitry for operating and measuring the sensing elements 800a, 800b is provided in a separate substrate, such as an integrated ASIC chip 810. The electrical connections between the external measuring system 810 and the sensing elements 800a, 800b may then be established via wire bonding between output bonding pads 825 provided in the carrier substrate 805 and input pads 835 of the external measuring system 810. In the configuration illustrated in Fig. 8, the sensing elements 800a, 800b are provided with contact pads (not shown) on a bottom side and which are electrically connected via conducting stripes 845 to electrode pads 825 provided on the carrier substrate 805. However, the sensing elements 800a, 800b may be electrically connected with any type of electrical connections, such as those described with reference to Figs. 5 - 7 above.

The contact pads on the sensing elements, the bonding pads and conducting strips on the capacitance measurement system, and/or their interconnection may be made using lithography and semiconducting processes currently used in the manufacture of integrated circuits.

Several configurations of capacitive sensing elements may be used for the sensing elements of the multi-sensing capacitive sensor according to the principles of the present invention, as those exemplified in Figs. 9 to 13.

Fig. 9 represents schematically a cross sectional side view of a capacitive sensing element 900 with a vertically stacked electrode-dielectric-electrode design. The capacitive sensing element 900 includes a top electrode 910, a bottom electrode 920, which may be directly formed onto a top surface of a substrate 930, and one or more layers of a gas-sensitive dielectric material 940 deposited between the top and bottom electrodes 910, 920. The bottom electrode 920 is conventionally made of a noble metal, such as gold. The gas-sensitive dielectric 940 may be made of an organic dielectric or an inorganic material. The composition and dimensions of the gas-sensitive dielectric material layer(s) 940 are selected based on the desired measurement sub-range and such as to provide capacitance values within the predetermined capacitance range. In a preferred configuration, the gas-sensitive dielectric material layer(s) 940 are made of an inorganic material, such as silicon carbide, nitride, silicium oxide, silicium nitride, inorganic oxides, and the like, which may exhibit a non-linear capacitance response (e.g. exponential) of the capacitive sensing element 900 as a function of the sensed physical parameter. Alternatively, the gas-sensitive dielectric material layer(s) 940 may be formed of or comprise an organic dielectric material, thereby exhibiting a linear variation of capacitance. For instance, the gas-sensitive dielectric material layer(s) 940 may be provided as a main dielectric layer of a polymer, such as polyimide, or as a multi-polymer layer.

The top electrode 910 may be made of a porous polymer, which is made conductive by inclusion of electrically conducting particles. The substrate 930 may be an integrated capacitance measurement system with active circuitry and a top passivation layer onto which the sensing element 900 is directly mounted or deposited, such as any of the ASICs systems described above, or a substrate carrier that provides only support for the sensing element 900 and bonding pads (not shown) for connecting the electrodes 910, 920 to an external capacitance measurement system. Additional layers 950, 960 may be provided between the top and bottom electrodes 910 and 920 to provide other functions, such as of an adhesion layer 950 for promoting adhesion of the dielectric layer 940 to the bottom electrode 920. Additional contact pads 970, 980 may be provided on the top electrode 910 and the mounting surface of the substrate 930 for electrically connecting the sensing element 900 to capacitance measurement circuitry.

Fig. 10 represents schematically a cross-section of a capacitive sensing element 1000 with an electrode configuration that differs from the configuration illustrated in Fig. 9 in that the top electrode 1010 is electrically connected to a landing pad 1025 provided on the substrate 1030, which is an ASIC chip in the illustrated example, by a via hole 1035 through the gas-sensitive dielectric layer 1040. The sensing element 1000 is directly deposited over a connecting pad 1045 provided on the ASIC 1030 for direct connection with the underlying capacitance measurement circuitry (not shown). The sensing element 1000 may include additional functional layers between the top and bottom electrodes 1010 and 1020, such as an adhesion layer (not shown) and a dielectric-protective layer 1050. Similarly to the configuration of Fig. 9, the gas-sensitive dielectric material layer(s) 1040 are preferably made of inorganic material(s), such as nitride, silicium oxide, silicium nitride, inorganic oxides, and the like. Nevertheless, the gas-sensitive dielectric material layer(s) 940 may be formed of or comprise an organic dielectric material(s).

Fig. 11 depicts a capacitive sensing element 1100 with a perforated structure design. The capacitive sensing element 1100 includes top and bottom electrodes 1110 and 1120 for measuring the capacitance of a gas-sensitive dielectric material 1140 placed between them. In this configuration the first electrode 1110, the gas-sensitive dielectric material 1140 and any additional layers provided between them, such as a dielectric-protective interface layer 1150, are traversed by vertical perforations or channels 1160 which increase the exposure surface of the gas-sensitive dielectric material 1140 to the gaseous medium. Since the gaseous medium to be sensed enters directly into contact with the gas-sensitive dielectric material 1140 through the perforated structure, the top electrode 1110 may be made of a non-porous material, such as a metal. Alternatively, the top electrode 1110 may be made of a porous conductive material, similarly to the examples described above, for improving further the absorption of gas/humidity by the gas sensitive dielectric material 1140. The second electrode 1120 may be a continuous electrode, made of any electrically conductive material, preferably a non-porous metal conductor. The perforated structure may be obtained using any known patterning processes in the field. A contact pad 1170 may be provided onto the substrate 1130 for direct connection to the bottom electrode 1120.

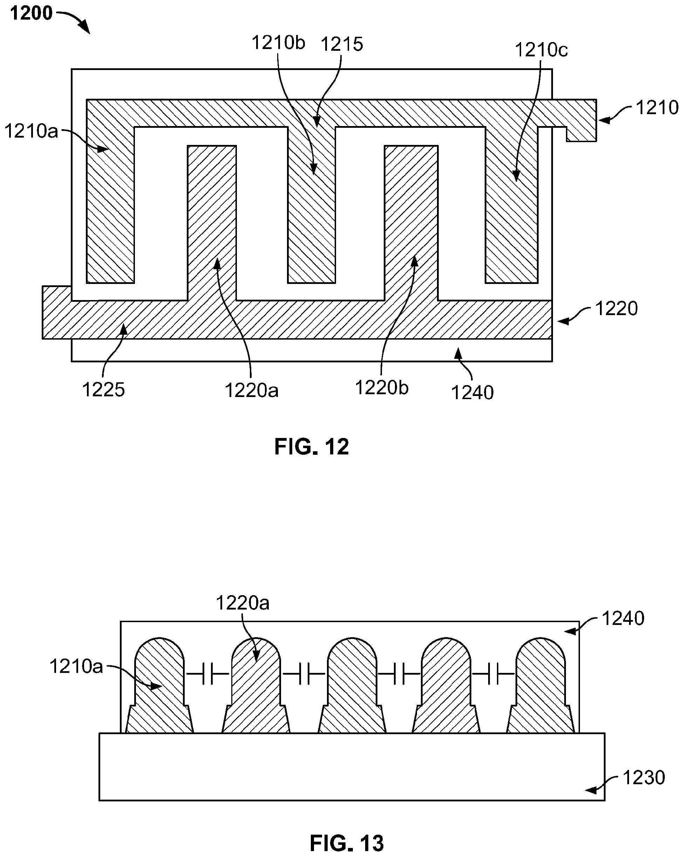

Capacitive sensing elements with an interdigitated electrode structure, such as illustrated in Figs. 12-13, may also be used. This configuration has the advantage that the sensing properties can be easily customized by simply adjusting the separation between interdigitated electrodes.

As shown in Fig. 12, the capacitive sensing element 1200 has first and second electrodes 1210 and 1220 that are arranged side by side, without overlapping with each other, on top of a substrate 1230. The first electrode 1210 includes one or more electrode islands 1210a - 1210c which are electrically connected by a conducting strip 1215 such as to act as a single electrode. The second electrode 1220 also comprises one or more electrode islands 1220a - 1220b connected to each other via a conducting strip 1225. Each of the electrode islands 1210a - 1210c and 1220a - 1220b have the shape of a finger such that an interdigitated structure can be achieved by disposing each of the electrode islands 1210a - 1210c of the first electrode 1210 between two electrode islands 1220a - 1220b of the second electrode 1220. Each interdigitated island is then used to apply a polarity opposite to the polarity of the immediately adjacent interdigitated island. A gas-sensitive dielectric material 1240 is deposited in the space between each pair of neighbouring interdigitated islands, and may eventually cover the interdigitated electrodes for maximizing the gas absorbing surface of the sensing element 1200, as shown in Fig. 13. In this illustrated configuration, the first and second electrodes 1210 and 1220 are arranged on a same plane, parallel to the substrate 1230 of the capacitive sensing element 1200. However, the interdigitated electrodes 1210 and 1220 may be arranged at different heights from the substrate 1230 and in an non-overlapping manner.

Since the interdigitated islands 1210a-1210c and 1220a-1220b do not cover the surface of gas-sensitive dielectric layer 1240 through which the gas/moisture is absorbed/adsorbed, the first and second electrodes 1210 and 1220 may be made of a non-porous conducting material, such as a metal. A dielectric-protective material (not shown) may be applied on surfaces of the interdigitated electrodes 1210 and 1220 that interface with the gas-sensitive dielectric material 1240 for reducing mechanical stress that may be applied by the interdigitated electrodes onto the gas-sensitive dielectric material 1240. The gas sensing element 1200 may be electrically connected via bonding pads placed, for e.g. at each end of the conducting strips 1215 and 1225 (not shown).

As mentioned above, the gas-sensitive dielectric materials of any of the sensing elements configurations described with reference to Figs. 1, 3, and 9 - 11 above are preferably made of or comprising inorganic material(s), such as nitride, silicium oxide, silicium nitride, inorganic oxides, and the like. Such sensing elements generally may exhibit a non-linear response as a function of the sensed physical parameter, such as an exponential-like function, a logarithmic-like function, and the like. However, alternative configurations are envisaged in which the gas-sensitive dielectric material of some or all of the sensing elements is made of or include organic dielectric(s), such as a polymer. For instance, the gas-sensitive dielectric material may include one or more layers of polyimide or other alternative polymer. The properties of the gas-sensitive dielectric layers, including layer thickness and material composition, depend on the sensitivity and measurement range desired for each sensing element, and therefore, on the specific application for which the multi-sensing capacitive sensor is intended. The component parts of the sensing elements described above, such as electrodes, dielectric layers and any functional layers in-between, may be directly deposited onto the carrier substrate or ASIC chip using patterning processes currently employed in the semiconductor industry, so that these will not be detailed here.

The integrated multi-sensing capacitive gas sensor described with reference to the embodiments above and respective sensing elements may be manufactured using techniques and processes commonly used in semiconductor technology. In particular, the manufacturing method may providing a capacitance measurement system, such as an ASIC, that is especially designed to measure one or a plurality of different sensing elements, depending on the specific application for the multi-sensing capacitive gas sensor, the number of physical quantities to be sensed and respective sensitivity ranges. One or more first sensing elements 100a - 100d, or of any of the types described above, for sensing a first physical quantity, such as relative humidity, over a first measurement range may then be arranged onto a side of the capacitance measurement system. As mentioned above, the first sensing element(s) are preferably gas-sensitive element(s) that provide a non-linear capacitance response as a function of the first physical quantity to be sensed and therefore, preferably made of an inorganic material, such as silicon carbide, nitride, silicium oxide, silicium nitride and inorganic oxides, and the like. Alternatively, the first sensing elements may be made of organic dielectric material(s), such as polymer(s). Furthermore, the parameters of the gas-sensitive dielectric layer(s) are tuned/adjusted such as to provide sensing elements with capacitances that fall within a predetermined capacitance range of capacitance measurement system and at respective sub-intervals of the desired measurement range, so that each sensing element is sensitive in a dedicated measurement interval, with no or only partial overlap with the measurement intervals of the other sensing element(s). The capacitance measurement system is designed with active circuitry adapted to measure capacitance of the first sensing element(s) and to obtain a measurement result for the first physical quantity based on a linear approximation of the measurements of capacitance of the one or more first sensing elements that fall within the predetermined capacitance range.

In order to measure an additional physical quantity, the manufacturing method may further include arranging second sensing element(s) onto a side of the capacitance measurement system, wherein the second sensing element(s) are adapted to sense a second physical quantity over a second measurement range. In such a case, each second sensing element is a gas-sensitive element with a capacitance that varies within the predetermined capacitance range for sensed values of the second physical quantity that fall in a respective sub-range of the second measurement range. Similarly to the first sensing element(s), the second sensing element(s) may be gas-sensitive element(s) that provide a non-linear capacitance response as a function of the first physical quantity to be sensed and therefore, preferably made of an inorganic material, such as silicon carbide, nitride, silicium oxide, silicium nitride and inorganic oxides, and the like. However, second sensing element(s) having organic dielectric materials as the gas-sensitive dielectric may also be used. In conclusion, the present invention provides a multi-ranging and/or multi-sensing capacitive sensor capable of measuring one or more gas physical quantities with a cost-effective and compact design, and offering a broader measurement range than generally achieved with conventional single capacitive sensors.

Finally, although the present invention has been described above with reference to multi-sensing capacitive sensors for sensing properties of a gaseous medium, such as relative humidity and/or pressure, the principles of the present invention can be advantageously applied to other types of sensor that use sensing elements with a non-linear response to a variation of a physical parameter to be sensed. The reference to organic dielectric material in the embodiments described above is to be understood has including any polymer material conventionally used in humidity sensing. Furthermore, although certain features of the above exemplary embodiments were described using terms such as "top", "bottom", and "upper", these terms are used for the purpose of facilitating the description of the respective features and their relative orientation in the multi-sensing capacitive sensor and should not be construed as limiting the claimed invention or any of its components to its use in a particular spatial orientation.

### Reference Signs

- 100: multi-sensing capacitive sensor
- 100a-100d: capacitive sensing elements
- 105: contact pad of sensing element
- 110: capacitance measurement system, ASIC
- 115: ASIC output pads

- 200: multi-sensing capacitive sensor
- 200a-200b: capacitive sensing elements for relative humidity
- 205: contact pad of sensing element
- 220: capacitive sensing element for pressure sensing
- 230: capacitive sensing element for air quality
- 210: capacitance measurement system
- 215: ASIC output pads

- 500: multi-sensing capacitive sensor
- 500a-500b: capacitive sensing elements
- 505: contact pads of sensing element 500a
- 510: capacitance measurement system, ASIC
- 525: ASIC input pads
- 535: ASIC output pads

- 600: multi-sensing capacitive sensor
- 600a-600b: capacitive sensing elements
- 605: contact pads of sensing element 600a
- 610: capacitance measurement system, ASIC
- 625: ASIC input pads
- 635: ASIC output pads

- 700: multi-sensing capacitive sensor
- 700a-700b: capacitive sensing elements
- 710: capacitance measurement system, ASIC
- 725: ASIC input pads
- 735: ASIC output pads
- 745: connecting wires/strips

- 800: multi-sensing capacitive sensor
- 800a-800b: capacitive sensing elements
- 805: substrate
- 810: external capacitance measurement system
- 825: output pads
- 835: input pads
- 845: connecting stripes

- 900: capacitive sensing element
- 910: first electrode, top electrode
- 920: second electrode, bottom electrode
- 930: substrate
- 940: gas sensitive dielectric layer
- 950: adhesion layer
- 960: dielectric-protective material
- 970, 980: contact pads

- 1000: capacitive gas sensor
- 1010: top electrode
- 1020: bottom electrode
- 1025: landing pad
- 1030: semiconductor circuit substrate, ASIC
- 1035: via hole
- 1040: gas sensitive dielectric material
- 1045: contact pad on ASIC
- 1050: dielectric-protective layer

- 1100: perforated capacitive gas sensor
- 1110: top electrode
- 1120: bottom electrode
- 1130: substrate
- 1140: gas-sensitive dielectric material
- 1150: dielectric-protective layer
- 1160: perforations
- 1170: contact pad
- 1200: interdigitated capacitive gas sensor
- 1210: first electrode
- 1210a-1210c: first electrode islands
- 1215: conducting strip
- 1220: second electrode
- 1220a-1220b: second electrode islands
- 1225: conducting strip
- 1230: substrate
- 1240: gas-sensitive dielectric material

## Claims

1. A multi-sensing capacitive gas sensor, comprising:
one or more first sensing elements (100a - 100d; 200a - 200b) adapted to sense a first physical quantity over a first measurement range; and
a capacitance measurement system (110; 210; 510; 610; 710; 810; 1030) adapted to perform measurements of capacitance of said one or more first sensing elements (100a-100d; 200a - 200b); wherein
each first sensing element (100a - 100d; 200a - 200b) is a gas-sensitive element having a capacitance that varies non-linearly with a variation of said first physical quantity and which is within a predetermined capacitance range for sensed values of the first physical quantity that fall in a respective sub-range of the first measurement range, and
the capacitance measurement system (110; 210; 510; 610; 710; 810; 1030) is adapted to obtain a measurement result for the first physical quantity based on a linear approximation of the measurements of capacitance of the one or more first sensing elements that fall within the predetermined capacitance range.

2. A multi-sensing capacitive gas sensor according to claim 1, wherein
one or more first sensing elements (100a -100d; 200a - 200b) comprises a gas-sensitive dielectric made of an inorganic material, the inorganic material selected from a group that includes silicon carbide, nitride, silicium oxide, silicium nitride and inorganic oxides; and/or
one or more first sensing elements comprises a gas-sensitive dielectric made of an organic dielectric material selected from a group that includes polyimide; and/or
the first physical quantity sensed by the one or more first sensing elements is one from a group including: relative humidity, pressure, air quality, gas composition and temperature.

3. A multi-sensing capacitive gas sensor according to claim 1 or 2, wherein
the multi-sensing capacitive gas sensor includes at least two first sensing elements adapted to sense the first physical quantity, each first sensing element being associated with a respective sub-range of the first measurement range,
the sub-ranges associated with the first sensing elements do not overlap each other or overlap only partially, and
wherein the capacitance measurement system (110; 210; 510; 610; 710; 810; 1030) is adapted to measure the capacitance of each of said at least two first sensing elements, to select a first sensing element for which the capacitance measurements fall within the predetermined capacitance range and to obtain the measurement result for the first physical quantity by applying said linear approximation to the capacitance measurements of the selected first sensing element.

4. A multi-sensing capacitive gas sensor according to any one of claims 1 to 3, further comprising:
one or more second sensing elements (220, 230) adapted to sense a second physical quantity over a second measurement range,
wherein each second sensing element (220, 230) is a gas-sensitive element having a capacitance that varies within said predetermined capacitance range for sensed values of the second physical quantity that fall in a respective sub-range of the second measurement range; and
wherein the capacitance measurement system (210) is adapted to perform measurements of capacitance of the one or more second sensing elements and to obtain a measurement result for the second physical quantity based on a linear approximation of the measurements of capacitance of the one or more second sensing elements that fall within the predetermined capacitance range; and/or
wherein the capacitance of said one or more second sensing elements (220, 230) varies linearly or non-linearly with the sensed second physical quantity.

5. A multi-sensing capacitive gas sensor according to claim 4, wherein
the multi-sensing capacitive gas sensor includes at least two second sensing elements adapted to sense the second physical quantity, each second sensing element being associated with a respective sub-range of the second measurement range,
wherein the sub-ranges associated with the second sensing elements do not overlap each other or overlap only partially, and
wherein the capacitance measurement system is adapted to measure the capacitance of each of said at least two second sensing elements, to select a second sensing element for which the capacitance measurements fall within the predetermined capacitance range and to obtain the measurement result for the second physical quantity by applying said linear approximation to the capacitance measurements of the selected second sensing element.

6. A multi-sensing capacitive gas sensor according to claim 4 or 5, wherein
one or more second sensing elements (220, 230) comprises a gas-sensitive dielectric made of an inorganic material, the inorganic material selected from a group that includes silicon carbide, nitride, silicium oxide, silicium nitride and inorganic oxides; and/or
one or more second sensing elements (220, 230) comprises a gas-sensitive dielectric made of an organic dielectric material selected from a group that includes polyimide; and/or
the second physical quantity is different from the first physical quantity and selected from a group that includes: relative humidity, pressure, air quality, gas composition and temperature. the one or more first sensing elements.

7. A multi-sensing capacitive gas sensor according to any one of claims 1 to 6, wherein
the capacitance measurement system is an Application-Specific Integrated Circuit "ASIC"; and/or
the non-linear capacitance of the sensing element follows one of an exponential function, a logarithmic function, an inverse function and a polynomial-like function of the respective sensed physical quantity.

8. A multi-sensing capacitive gas sensor according to any one of claims 1 to 7, wherein
each sensing element is directly mounted onto the capacitance measurement system which is provided as an integrated circuit; or
each sensing element is mounted onto a carrier substrate that is separate from the capacitance measurement system.

9. A multi-sensing capacitive gas sensor according to any one of claims 1 to 8, wherein one or more of the sensing elements comprise:
a first electrode (910; 1010; 1110; 1210);
a second electrode (920; 1020; 1120; 1220);
a gas-sensitive dielectric material (940; 1040; 1140; 1240) arranged between the first and the second electrodes to form a gas-sensitive capacitor, the gas-sensitive dielectric material (940; 1040; 1140; 1240) having a permittivity that depends on an amount of gas compound absorbed from an environmental medium; and/or
wherein the gas-sensitive dielectric material (940; 1040; 1140; 1240) is one of an organic dielectric material and an inorganic material.

10. A multi-sensing capacitive gas sensor according to claim 9, wherein one or more of the sensing elements is directly mounted onto a semiconductor circuit substrate (1030),
the second electrode (1020) being arranged directly on the semiconductor circuit substrate (1030),
the first electrode (1010) being connected to a patch in the semiconductor circuit substrate (1030) through a via hole (1035) that passes across the gas-sensitive dielectric material (1040).

11. A multi-sensing capacitive gas sensor according to any one of claims 1 to 8, wherein one or more of the sensing elements has a perforated structure design or an interdigitated electrode structure design.

12. A method of manufacturing an integrated multi-sensing capacitive gas sensor with improved sensor accuracy, the method comprising:
providing a capacitance measurement system (110; 210);
arranging one or more first sensing elements (100a - 100d; 200a - 200b) onto a side of the capacitance measurement system (110; 210), wherein
the one or more first sensing elements (100a - 100d; 200a - 200b) are adapted to sense a first physical quantity over a first measurement range,
each first sensing element is a gas-sensitive element adapted to provide a capacitance that varies non-linearly with a variation of said first physical quantity and which is within a predetermined capacitance range for sensed values of the first physical quantity that fall in a respective sub-range of the first measurement range, and
the capacitance measurement system (110; 210) is designed with active circuitry adapted to measure capacitance of said one or more first sensing elements (100a - 100d; 200a - 200b) and to obtain a measurement result for the first physical quantity based on a linear approximation of the measurements of capacitance of the one or more first sensing elements (100a - 100d; 200a - 200b) that fall within the predetermined capacitance range.

13. A method of manufacturing according to claim 12, the method further comprising:
arranging one or more second sensing elements (220, 230) onto a side of the capacitance measurement system (210), wherein
the one or more second sensing elements (220, 230) is adapted to sense a second physical quantity over a second measurement range,
each second sensing element (220, 230) is a gas-sensitive element having a capacitance that varies within a predetermined capacitance range for sensed values of the second physical quantity that fall in a respective sub-range of the second measurement range, and
the capacitance measurement system is further adapted to measure capacitance of said one or more second sensing elements (220, 230) and to obtain a measurement result for the second physical quantity based on a linear approximation of the measurements of capacitance of the one or more second sensing elements (220, 230) that fall within the predetermined capacitance range.

14. A method of measuring one or more physical quantities of a gaseous medium with improved measurement accuracy, the method comprising:
providing one or more first sensing elements (100a - 100d; 200 - 200b) adapted to sense a first physical quantity over a first measurement range, wherein each first sensing element is a gas-sensitive element having a capacitance that varies non-linearly with a variation of said first physical quantity and which is within a predetermined capacitance range for sensed values of the first physical quantity that fall in a respective sub-range of the first measurement range;
acquiring a capacitance measurement of each of the one or more first sensing elements;
selecting one or more of the first sensing elements (100a - 100d;200 - 200b) for which the capacitance measurements fall within the predetermined capacitance range;
obtaining a measurement result for said first physical quantity by applying a linear approximation to the capacitance measurements of the selected one or more first sensing elements; and
outputting the measurement result for the first physical quantity determined using said linear approximation.

15. A method of measuring according to claim 14, the method further comprising:
providing one or more second sensing elements (220, 230) adapted to sense a second physical quantity over a second measurement range, wherein each second sensing element is a gas-sensitive element having a capacitance that varies within a predetermined capacitance range for sensed values of the second physical quantity that fall in a respective sub-range of the second measurement range;
acquiring a capacitance measurement of each of the one or more second sensing elements (220, 230);
selecting one or more of the second sensing elements (220, 230) for which the capacitance measurements fall within the predetermined capacitance range;
obtaining a measurement result for said second physical quantity by applying a linear approximation to the capacitance measurements of the selected one or more second sensing elements (220, 230); and
outputting the measurement result for the second physical quantity determined using said linear approximation.
